# EUROPÄISCHE PATENTSCHRIFT

(11) **EP 2 072 102 B1**
(45) Veröffentlichungstag und Bekanntmachung des Hinweises auf die Patenterteilung: **29.06.2011**
(21) Anmeldenummer: 08172434.6
(22) Anmeldetag: 19.12.2008
(51) Int. Cl.: B01D 15/38, B01D 15/40

(54) **Verfahren zur Gewinnung von Fettbegleitstoffen aus Kraftstoffen und Verwendung dieses Verfahrens**
Method for gaining fatty associated materials from fuels and use of this method
Procédé d'obtention de substances associées à la graisse à partir de carburants et utilisation dudit procédé

(30) Priorität: 20.12.2007 DE 102007061436
(43) Veröffentlichungstag der Anmeldung: 24.06.2009
(73) Patentinhaber: Fraunhofer-Gesellschaft zur Förderung der angewandten Forschung e.V., 80686 München (DE)
(72) Erfinder: Heil, Volker, 46145 Oberhausen (DE); Grevé, Anna, 44795 Bochum (DE); Weber, Achim, 73776 Altbach (DE); Tovar, Günter, 71111 Waldenbuch (DE); Herold, Marc, 66123 Saarbrücken (DE); Hirth, Thomas, 77815 Bühl (DE); Gruber-Traub, Carmen, 70188 Stuttgart (DE); Nellese, Anke, 47055 Duisburg (DE); Kraft, Axel, 45759 Oer-Erkenschwick (DE)

(56) Entgegenhaltungen:
- EP-A- 0 712 651
- EP-A- 1 122 250
- EP-A- 1 818 388
- DE-A1-102005 032 054
- PUOCI F ET AL: "Molecularly imprinted solid phase extraction for the selective HPLC determination of alpha-tocopherol in bay leaves" ANALYTICA CHIMICA ACTA, ELSEVIER, AMSTERDAM, NL, Bd. 593, Nr. 2, 19. Juni 2007 (2007-06-19), Seiten 164-170, XP025321384 ISSN: 0003-2670 [gefunden am 2007-05-30]
- PUOCI ET AL: "Molecularly imprinted solid-phase extraction for cholesterol determination in cheese products" FOOD CHEMISTRY, ELSEVIER SCIENCE PUBLISHERS LTD, GB, Bd. 106, Nr. 2, 31. August 2007 (2007-08-31), Seiten 836-842, XP022227240 ISSN: 0308-8146
- CHOO Y M ET AL: "SEPARATION OF CRUDE PALM OIL COMPONENTS BY SEMIPREPARATIVE SUPERCRITICAL FLUID CHROMATOGRAPHY" JOURNAL OF THE AMERICAN OIL CHEMISTS' SOCIETY, SPRINGER, BERLIN, DE, Bd. 73, Nr. 4, 1. April 1996 (1996-04-01), Seiten 523-525, XP000582501 ISSN: 0003-021X
- YARITA T ET AL: "SUPERCRITICAL FLUID CHROMATOGRAPHIC DETERMINATION OF TOCOPHEROLS ONAN ODS-SILICA GEL COLUMN" JOURNAL OF CHROMATOGRAPHY, ELSEVIER SCIENCE PUBLISHERS B.V. AMSTERDAM, NL, Bd. 679, 23. September 1994 (1994-09-23), Seiten 329-334, XP000999044 ISSN: 0021-9673
- GALUBA G ET AL: "SEPARATION OF TOCOPHEROLS AND STEROLS IN SOYBEAN OIL CONDENSATE UTILIZING SUPERCRITICAL FLUID CHROMATOGRAPHY (SFC)" CHEMIA ANALITYCZNA, WARSZAW, PL, Bd. 42, Nr. 2, 1. Januar 1997 (1997-01-01), Seiten 245-248, XP000999091 ISSN: 0009-2223
- DONG HE ET AL.: "Syntheses of steroid-based molecularly imprinted polymers and their molecular recognition study with spectrometric detection." SPECTROCHIMICA ACTA. PART A, MOLECULAR AND BIOMOLECULAR SPECTROSCOPY, Bd. 59, Nr. 2, 15. Januar 2003 (2003-01-15), Seiten 279-284, XP002519697

## Beschreibung

Diese Patentanmeldung beansprucht die Priorität der deutschen Patentanmeldung 10 2007 061 436.7, deren Offenbarungsgehalt hiermit durch Rückbezug aufgenommen wird.

Die Erfindung betrifft ein Verfahren zur Isolierung von Fettbegleitstoffen aus Kraftstoffen, insbesondere Biokraftstoffen sowie aus Ölen und Fetten, die zur Herstellung von Biokraftstoffen eingesetzt werden. Die Gewinnung erfolgt dabei mittels Sorption des Fettbegleitstoffs an einem Stoff mit molekularer Erkennung (MIM).

Biogene Fette und Öle, insbesondere solche aus pflanzlichem Ursprung, werden in technischen Prozessen zu Non-food-Produkten wie Biodiesel und Seifen verarbeitet. Für diese Non-food-Produkte haben die in diesen Fetten und Ölen enthaltenen Fettbegleitstoffe (wie Triglyceride und freie Fettsäuren) keine oder nur eine untergeordnete Bedeutung oder sind sogar unerwünscht. Insbesondere sind hier die sogenannten "Minorkomponenten" zu nennen - also Fettbegleitstoffe, die in geringer Konzentration auftreten können, aber ein Reinform einen hohen Marktwert besitzen. Als wichtige Vertreter sind hierbei Tocochromanole wie Tocopherol, Carotinoide, Sterole, Lecithin und Glucosinolate zu nennen.

Aus dem Stand der Technik sind eine Reihe von Verfahren zur Gewinnung von Minorkomponenten aus Ölen und Fetten bekannt. Es handelt sich hierbei entweder um rein physikalische Methoden oder um Methoden, bei denen eine Kombination aus chemischer Derivatisierung und physikalischer Extraktion vorliegt. Demnach muss entweder zunächst eine vorgelagerte Derivatisierung erfolgen oder eine energieintensive Behandlung der gesamten Ölmenge mit Lösemitteln oder überkritischen Gasen.
Die US 2002/0042527 A1 beschreibt beispielsweise ein Verfahren zur Gewinnung von Tocopherolen aus pflanzlichen Ölen, bei dem zunächst eine Veresterung und nachfolgend Destillations- und Extraktionsschritte erfolgen.
Die DE 34 24 614 C2 beschreibt ein Verfahren, bei dem organische Substanzen wie Tocopherol aus pflanzlichen Fetten und Ölen bei hohen Drücken aber in der unterkritischen Phase des Lösungsmittels (z.B. CO₂) extrahiert werden.
Die DE 101 64 274 B4 beschreibt ein Verfahren zur kontinuierlichen Extraktion von freien Fettsäuren, Tocopherolen und Sterolen aus nativen Ölen, bei dem das Gemisch aus freien Fettsäuren und nativen Ölen mit einem Alkohol als Extraktionsmittel versetzt und mit Ultraschall beaufschlagt wird. In der alkoholischen Phase können dabei freie Fettsäuren, Tocopherole und Sterole angereichert und anschließend abgetrennt werden.

Die vorstehenden Verfahren haben den Nachteil, dass sie relativ aufwändig und vielstufig sind und dass keine selektive Trennung der verschiedenen Komponenten (z.B. in α-Tocopherol und γ-Tocopherol) erfolgt.
Erfindungsgemäß wird ein Verfahren offenbart, bei dem die Trennung mittels molekulargeprägter Polymere erfolgt.

Die DE 199 36 992 A1 beschreibt ein Verfahren zur Stofftrennung und Analytik von flüssigen oder gasförmigen Stoffgemischen, bei dem mittels einer Affinitätsfiltration durch eine Anordnung mit Templat-geprägtem Polymer eine Auftrennung der verschiedenen Komponenten des Stoffgemischs erfolgt. Das Templat-geprägte Polymer wird hierfür auf eine Membran aus Kunststoff oder auf Mikrotiterplatten aufgebracht.
Das Verfahren hat den Nachteil, dass damit nur eine qualitative Aussage über enthaltene Komponenten möglich ist.

Die DE 10 2005 032 054 A1 beschreibt ein Verfahren zur Trennung und Reinigung von Stoffen oder Stoffgemischen. Hierbei wird eine Suspension oder eine Lösung, die den Stoff oder das Stoffgemisch enthält, über eine Kolonne geleitet, die eine Kolonnenpackung mit einer Beschichtung aus einem Stoff mit molekularer Erkennung enthält. Im Fokus dieser Schrift steht die Herstellung von hochreinen chemischen und biochemischen Stoffen. Ein Verfahren zur Abtrennung von Minorkomponenten wird in dieser Schrift nicht beschrieben.

Der vorliegenden Erfindung liegt daher die Aufgabe zugrunde, die Nachteile des Stands der Technik zu überwinden und ein Verfahren anzugeben, mit dem selektiv und in hohen Reinheitsgraden Fettbegleitstoffe aus Kraftstoffen gewonnen werden können. Diese Aufgabe wird durch das Verfahren gemäß den unabhängigen Ansprüchen gelöst. Unteransprüche geben vorteilhafte Weiterbildungen an.

Das erfindungsgemäße Verfahren zur Gewinnung von Fettbegleitstoffen aus Kraftstoffen weist folgende Schritte auf: Zunächst wird eine Kolonne bereitgestellt, in der ein Stoff mit molekularer Erkennung (MIM) enthalten ist. Dieser Stoff kann zumindest teilweise als Beschichtung auf der Kolonne selbst vorliegen, er kann aber auch in Füllkörpern, die in der Kolonne enthalten sind, enthalten sein und/oder Füllkörper aus einem Stoff mit molekularer Erkennung enthalten und/oder Füllkörper, die mit einem Stoff mit molekularer Erkennung beschichtet sind, enthalten. Die beiden letztgenannten Alternativen sind hierbei besonders bevorzugt.
Mit dieser Kolonne wird anschließend das flüssige Ausgangsmaterial, das Fettbegleitstoffe enthält, in Kontakt gebracht, so dass mindestens ein Fettbegleitstoff an den Stoff mit molekularer Erkennung sorbiert wird. Dieser Schritt wird nachfolgend Sorptionsphase genannt. Die Sorption des Stoffs muss hierbei nicht quantitativ erfolgen. Aus verfahrensökonomischen Gründen wird sogar im Regelfall nur eine teilweise Sorption des Fettbegleitstoffs stattfinden. Unter Ausgangsmaterial werden erfindungsgemäß Fettbegleitstoffe enthaltende Kraftstoffe verstanden. Hier sind insbesondere Biokraftstoffe und Öle und Fette, die zur Herstellung von Biokraftstoffen eingesetzt werden oder während der Herstellung von Biokraftstoffen entstehen, zu nennen.
Anschließend an die Sorptionsphase erfolgt die Desorptionsphase. Hierbei wird der mindestens eine Fettbegleitstoff vom Stoff mit molekularer Erkennung (MIM) wieder desorbiert, indem ein flüssiges, gasförmiges oder dampfförmiges Lösungsmittel mit dem MIM in Kontakt gebracht wird. Der Fettbegleitstoff wird dann im Lösungsmittel zumindest teilweise gelöst. Zur Isolierung des Fettbegleitstoffs wird schließlich das Lösungsmittel von dem mindestens einem Fettbegleitstoff durch herkömmliche Verfahren wieder abgetrennt.

Wesentlicher Vorteil des erfindungsgemäßen Verfahrens ist, dass eine Methode bereitgestellt wird, bei der die verwendeten Ausgangsmaterialien auch nach Abtrennung der Fettbegleitstoffe weiter nutzbar bleiben. Bei den ohne MIMs arbeitenden Verfahren nach dem Stand der Technik ist es in keinem der Prozesse möglich, Minorkomponenten aus einem Ölstrom abzutrennen, ohne diesen über die Minorkomponentenentnahme hinaus chemisch zu verändern. Dagegen ist erfindungsgemäß die Abtrennung von Fettbegleitstoffen beispielsweise aus Rapsöl während dessen Vorbehandlung zum Einsatz in Biodieselanlagen möglich. Werden die eingesetzten Ausgangsstoffe im food-Bereich weiter verwendet, so ermöglicht die Erfindung auch eine Verbesserung der Verträglichkeit der pflanzlichen Fette und Öle für den menschlichen Organismus, da unverträgliche oder schwer verwertbare Fettbegleitstoffe selektiv abgetrennt werden können (zu nennen sind z.B. Glucosinolate im Fall des Rapsöls oder Gossypol im Fall des Baumwollöls).
Ein weiterer wesentlicher Vorteil ist, dass das erfindungsgemäße Verfahren stets als "Add-on-Lösung" einsetzbar ist und somit mit geringem technischen Aufwand eine zusätzliche Wertschöpfung bei der Verarbeitung biogener Fette und Öle ermöglicht wird. So können die abgetrennten Fettbegleitstoffe ohne zusätzlichen Rohstoffeinsatz als Seitenproduktstrom aus bestehenden Produktionsprozessen gewonnen werden. Gegenüber herkömmlichen Gewinnungsverfahren der Fettbegleitstoffe liegt der Vorteil auch darin, dass der Öl- bzw. Fettstrom nur einem geringen zusätzlichen massenspezifischen Energieeintrag unterworfen werden muss. Im Wesentlichen ist hierbei nur ein mechanischer Energieeintrag zur Überwindung des Druckverlusts zu nennen, der sich durch das Durchströmen der Adsorberkolonne ergibt. Zusätzlich hierzu kommt im Wesentlichen nur noch eine Temperaturerhöhung zur Reduzierung der Viskosität des Ausgangsmaterials in Betracht.

Die für das erfindungsgemäße Verfahren erforderlichen Stoffe mit molekularer Erkennung (MIM) können molekular geprägte Polymere (MIP) oder Keramiken (MIC) sein. Zu den MIPs zählen auch Hydrogele (liegen die MIMs allerdings in einer Matrix aus einem Hydrogel oder einem Lipogel vor, so wird als MIM nicht ebenfalls ein Hydrogel eingesetzt. Die Herstellung dieser Stoffe erfolgt nach den allgemein bekannten Verfahren, bei denen die MIMs in Gegenwart eines Templats hergestellt werden. Beispielsweise seien molekular geprägte Polymere genannt, bei denen die Herstellung durch Polymerisation oder Fällung in Gegenwart eines Templats erfolgt. Das Templat besteht dabei aus einer Verbindung, die ganz oder in Teilen ihrer Struktur mit der abzutrennenden Verbindung übereinstimmt. Die Polymerisation kann dabei als Lösungspolymerisation, Bulkpolymerisation, Emulsionspolymerisation, Miniemulsionspolymerisation, Dispersionspolymerisation oder Fällungspolymerisation durchgeführt werden. Ein Verfahren zur Herstellung der MIMs mittels Miniemulsionspolymersation beschreibt beispielsweise die DE 100 31 859 A1. Ein weiteres Verfahren gibt die WO 01/19886 A1 an.

In einer vorteilhaften Ausgestaltung werden die mit MIMs beschichteten Füllkörper durch Beschichtung von Füllkörpern hergestellt, die in einem Destillationsverfahren verwendbar sind. Derartige Füllkörper sind beispielsweise in der DE 10 2005 03 054 A1 beschrieben. Als Füllkörper für Destillationsverfahren sind z.B. Berlsättel, Raschigringe, Pall-Ringe, Zylinder, Kugeln, Hohlkugeln, Granulate oder Gemische aus zwei oder mehreren dieser Füllkörper zu nennen.
Sie haben den Vorteil, dass sie eine besonders große Oberfläche, die mit MIMs beschichtet ist, besitzen. Weiterhin ist hier der Energiebedarf durch den reduzierten Druckverlust gegenüber herkömmlichen Sorptionsverfahren besonders vorteilhaft. Alternativ sind auch andere Formkörper als Füllkörper geeignet, sofern das Verhältnis Oberfläche/Volumen größer oder gleich dem von Raschigringen ist.

In einer alternativen Ausführungsform können die (unbeschichteten) Füllkörper aus einem porösen Material bestehen oder Bereiche aus porösem Material (insbesondere eine Beschichtung aus einem porösen Material) umfassen. Die Füllkörper können dabei grundsätzlich jede geometrische Form besitzen und auch die gleiche geometrische Form besitzen, wie die vorstehend beschriebenen Füllkörper, die in einem Destillationsverfahren verwendbar sind. Werden Füllkörper aus porösem Material eingesetzt, so kann neben der äußeren Oberfläche auch die innere Oberfläche der Füllkörper mit MIMs beschichtet sein werden. Hierdurch lässt sich die auf die äußere Füllkörperoberfläche bezogene spezifische Adsorptionskapazität für die zu sorbierenden Fettbegleitstoffe gegenüber der rein äußerlichen Belegung nichtporöser Füllkörpermaterialien um ein Vielfaches vergrößern.

Die porösen Füllkörper sollten insbesondere Makroporen enthalten. Insbesondere sollte ein deutlicher Anteil an Poren mit einem Porendurchmesser zwischen 50 nm und 10 µm, bevorzugt zwischen 200 nm und 1 µm, besonders bevorzugt zwischen 250 und 500 µm, vorhanden sein. Der mittlere Porendurchmesser kann insbesondere 50 nm bis 3 µm, bevorzugt mindestens 0,5 µm betragen. Porenvolumen, Porendurchmesser und mittlerer Porendurchmesser können dabei mittels Quecksilberporosimetrie gemessen bzw. aus den mittels Quecksilberporosimetrie gemessenen Daten bestimmt werden. Wesentlich ist, dass zu einer effektiven Vergrößerung der Adsorptionskapazität mehr innere Oberfläche als äußere Oberfläche, insbesondere mindestens 5 mal so viel innere wie äußere Oberfläche, bevorzugt mindestens 10 mal so viel innere wie äußere Oberfläche, mit den MIMs beschichtet werden kann. Als äußere Oberfläche werden dabei auch alle Poren mit einem Durchmesser größer 2 mm verstanden. Die Bestimmung der inneren Oberfläche kann dabei für Poren mit einem Durchmesser bis etwa 950 µm mittels Quecksilberporosimetrie erfolgen. Für Poren größer etwa 950 µm bis 2 mm kann die Oberfläche dann anhand der für die mittels Quecksilberporosimetrie ermittelten Werte durch Auswertung mikroskopischer Aufnahmen (z.B. lichtmikroskopischer oder elektronenmikroskopischer Aufnahmen) extrapoliert werden. Die äußere Oberfläche kann ebenfalls durch Auswertung mikroskopischer Aufnahmen ermittelt werden (insbesondere für den Fall, dass zumindest 95% der porösen Füllkörper eine monodisperse Struktur besitzen). Ist die Struktur der porösen Füllkörper uneinheitlich, so wird die Größe der äußeren Oberfläche durch Extrapolation ermittelt. Für die äußere Oberfläche wird dabei hilfsweise die Oberfläche einer gedachten Kugel angesetzt, die den jeweiligen Füllkörper umschreibt. Der Radius der Kugel wird hierbei mittels der durch Siebverfahren ermittelten Partikelgrößen (bzw. Partikeldurchmesser) ermittelt.

Die erfindungsgemäß eingesetzten MIMs, insbesondere die zur Beschichtung von porösen Füllkörpern eingesetzten MIMs haben häufig eine mittlere Partikelgröße von etwa 50 bis 500 nm, bevorzugt von 150 bis 300 nm. Die mittlere Partikelgröße wird hierbei mittels Lichtstreuung ermittelt.

In einer Ausführungsform können die porösen Füllkörper auch vorab chemisch hydrophobiert werden, oder mit einem Material, insbesondere einem Polymer beschichtet werden, welches eine chemische Fixierung der MIPS, etwa durch Organo-Schwefel, Organo-Stickstoff oder Organo-Sauerstoffhaltige "Ankerbrücken", die optional auch mehrere Kohlenwasserstoffketten als Abstandshalter enthalten können, erlaubt. Als Materialien mit Ankergruppen kommen hierbei insbesondere die Materialien bzw. Polymere in Betracht, die für die Herstellung von Ionenaustauschern Verwendung finden. Eine Hydrophobierung kann beispielsweise erfolgen, indem eine Beschichtung der Poren mit einer Kohlenstoff-Schicht erfolgt. Dies kann insbesondere erfolgen, indem ein kohlenstoffhaltiges Material auf der Oberfläche der Poren chemisch zersetzt wird. Als kohlenstoffhaltiges Material kommen hierbei beispielsweise Fette und/oder Stoffe mit niedriger Viskosität in Betracht (z.B. Dibutylether). Ferner können α-Hydroxycarbonsäuren (z.B. Milchsäure) verwendet werden. Letztere haben den Vorteil, dass durch Art und Menge der für die Zersetzung verwendeten Säure der Hydrophybierungsgrad steuerbar ist.

Als poröse Füllkörper kommen jegliche porösen Keramiken in Betracht, insbesondere poröse Trägermaterialien oder Katalysatoren, die bei der Ethylenoxidherstellung oder Maleinsäureanhydridherstellung gebräuchlich sind. Zu nennen sind neben porösem Aluminiumoxid und Aluminiumoxid enthaltenden porösen Keramiken insbesondere auch Silica und Bimsstein sowie synthetische Materialien nach Art eines Bimssteins.

Als poröse Füllkörper können z.B. Füllkörper aus makroporösem gebranntem α-Aluminiumoxid beschichtet werden. Diese können z.B. mit kugelförmigen MIPs mit äußeren Abmessungen von etwa 200 nm beschichtet werden. Makroporöses α-Aluminiumoxid ist z.B. über die Firma CeramTec CZ erhältlich. Ein Verfahren zur Herstellung geben die DE 2922258 A1 und die DE 19803890 A1 an, auf die diesbezüglich vollumfänglich Bezug genommen wird.

In einer weiteren Ausführungsform weisen die Füllkörper, die einen Stoff mit molekularer Erkennung (MIM) enthalten, insbesondere eine Beschichtung mit dem Stoff mit molekularer Erkennung (MIM) aufweisen, neben dem Stoff mit molekularer Erkennung (MIM) eine polymere Matrix auf, in dem der fertig funktionalisierte Stoff mit molekularer Erkennung (MIM) vorliegt. Insbesondere sind hierbei zum einen Füllkörper zu nennen, die aus der polymeren Matrix und dem Stoff mit molekularer Erkennung (MIM) bestehen oder die diese beiden Materialien umfassen; zum anderen sind Füllkörper mit Beschichtungen zu nennen, die aus der polymeren Matrix und dem Stoff mit molekularer Erkennung (MIM) bestehen oder die diese beiden Materialien umfassen. Die Füllkörper bzw. Beschichtungen aus der polymeren Matrix und dem Stoff mit molekularer Erkennung (MIM) sind hierbei im Regelfall nicht formstabil (kehren also anders als z.B. ein Schwamm nach mechanischer Beanspruchung nicht mehr in eine Ausgangsform zurück).

Als polymere Matrix kommen hierbei insbesondere Hydrogele und/oder Lipogele in Betracht. Unter einem Hydrogel wird hierbei ein wasserunlösliches Polymer verstanden, dessen Moleküle chemisch, z. B. durch kovalente oder ionische Bindungen oder physikalisch, z. B. durch Verschlaufen der Polymerketten, zu einem dreidimensionalen Netzwerk verknüpft sind wobei das Polymer hydrophile Gruppen aufweist. Durch die eingebauten hydrophilen Polymerkomponenten kann es in Wasser zu einem Quellen des Hydrogels unter Volumenzunahme kommen, ohne dass der stofflichen Zusammenhalt verloren geht. Unter einem Lipogel wird dementsprechend ein in unpolaren Lösungsmitteln unlösliches Polymer der vorgenannten Art verstanden (wobei keine hydrophilen Gruppen enthalten sein müssen), bei dem es in einem unpolaren Lösungsmittel (z.B. einem Öl) zu einem Quellen des Lipogels unter Volumenzunahme kommen kann, ohne dass der stofflichen Zusammenhalt verloren geht. In jedem Fall nimmt ein (noch nicht beladenes) Hydrogel Wasser auf; üblicherweise erfolgt bei den erfindungsgemäßen Hydrogelen eine Wasseraufnahme von zumindest 5 Gew.-% (bezogen auf das Gewicht des Hydrogels). Entsprechendes gilt für das System Lipogel/unpolares Lösungsmittel.

Als Hydrogele und/oder Lipogele eignen sich sowohl natürliche als auch synthetische Polymere. Die Hydrogele können insbesondere ausgewählt werden aus der Gruppe bestehend aus Polysacchariden, Materialien auf Polydimethylsiloxanbasis, Materialien auf (Meth)acrylatbasis, Poly(meth)acrylsäure, Salzen der Poly(meth)acrylsäure, Polyacrylamid, Polyalkoholen, Gemischen von derartigen Materialien und Copolymeren der genannten synthetischen Polymere. Die Lipogele können insbesondere ausgewählt werden aus der Gruppe bestehend aus Polysacchariden, Materialien auf Polydimethylsiloxanbasis, Materialien auf (Meth)acrylatbasis, Poly(meth)acrylsäure, Salzen der Poly(meth)acrylsäure, Polyacrylamid, Polyalkoholen, Fetten, Ölen, Wachsen, Paraffinen, Gemischen von derartigen Materialien und Copolymeren der genannten synthetischen Polymere. Polysaccharide können insbesondere ausgewählt werden aus der Gruppe bestehend aus Alginaten, Alginsäure, Amylose, Amylopektin, Callose, Carragenan, Cellulose, Chitin, Dextran, Guluronsäure, Inulin, Laminarin, Lichenin, Pullulan, Pustulan, Stärke, Stärkederivaten, Xanthan oder Mischungen derselben. Das Matrixmatieral kann - insbesondere, wenn es sich um eines der genannten synthetischen Polymere handelt - Vernetzungs- und Verarbeitungshilfsmittel und Eigenschaftsverbesserer enthalten.

Die Herstellung von Füllkörpern oder Beschichtungen aus Matrixmaterial, in dem der fertig funktionalisierte Stoff mit molekularer Erkennung (MIP) vorliegt, kann beispielsweise konventionell dadurch geschehen, dass vorher fertig funktionalisierte und polymerisierte MIPs durch in-situ-Polymerisation (der Hydro- oder Lipogele) in polymeren Hydro- oder Lipogelen eingelagert werden. Die fertig funktionalisierten und polymerisierten MIPs können dabei mit oder ohne angedockte Templatmoleküle eingesetzt werden. Eine Polymerisation mit angedockten Templatmolekülen hat den Vorteil, dass die Sorptionszentren der MIPs währden der Polymerisation geschützt sind und weniger leicht blockiert werden können. Die Einlagerung der MIPs bei der Polymerisation ist meist irreversibel. Als Hydrogele bzw. Lipogele eignen sich also insbesondere die Stoffe, die aus den entsprechenden Monomeren mittels in-situ-Polymerisation herstellbar sind. Häufig erfolgt die in-situ-Polymerisation bereits in dem Lösungsmittel, das vom Hydrogel bzw. Lipogel aufgenommen wird, also in Wasser bzw. in einem unpolaren Lösungsmittel. Die Polymerisation wird dabei nach den dem Fachmann bekannten Methoden durchgeführt (z.B. durch Verwendung eines Radikalstarters oder durch ein Polykondensationsverfahren, z.B. in Gegenwart eines Wasser entziehenden Mittels, und/oder durch Einbringen von Energie z.B. UV-Strahlung).

Als Hydrogele, in denen eine reversible Einlagerung des Stoffs mit molekularer Erkennung (MIM) erfolgt, lassen sich beispielsweise Hydrogele aus Poly-N-isopropylacrylamid (PNIPAAm) und/oder dessen Copolymeren mit Acrylsäure und/oder Methacrylsäure verwenden. PNIPAAm-Hydrogele sind bekannt für ihre Eigenschaft, in Abhängigkeit von Umgebungsparametern ihren Quellgrad zu verändern. So kann die PNIPAAm-Hydrogelmatrix durch Quellen in wässrigen NanoMIP-Emulsionen beladen werden und durch Erhöhung der Temperatur über die LCST (Lower Critical Solution Temperature) wieder entladen werden, beispielsweise wenn die Aktivität der nano-MIPs nachlassen sollte. Das so kollabierte Gel kann bei niedrigeren Temperaturen mit frischer, wässriger Nano-MIP-Emulsion gequollen und so wieder "aufgeladen" werden. Um die LCST der PNIPAAm-Hydrogele zu erhöhen, können Acrylsäure und/oder Methacrylsäure als Copolymerisate verwendet werden, wobei die Copolymere vorzugsweise bis zu 10 Gew.-% der für die Matrix verwendeten Gesamtmonomermasse ausmachen. Auch in Lipogelen ist eine reversible Einlagerung möglich.

Durch Verwendung von in einer Matrix vorliegendem Stoff mit molekularer Erkennung (MIM) kann - insbesondere als Beschichtung auf nicht oder wenig porösen Füllkörpermaterialien oder direkt als Füllkörper - eine erhöhte füllkörperoberflächenbezogene spezifische Adsorptionskapazität erzielt werden.

Das erfindungsgemäße Verfahren zur Abtrennung von Fettbegleitstoffen kann als Teilschritt an einer beliebigen Stelle in den Produktionsprozess der technischen Verarbeitung biogener Fette und Öle eingebracht werden. Vorteilhafterweise geschieht dies zu einem Zeitpunkt, zu dem die Fette und/oder Öle oder ihre Produkte und Seitenströme flüssig oder durch Temperatur- oder Druckeinwirkung verflüssigbar vorliegen. Bei der Biodieselherstellung aus Rapsöl kann dies beispielsweise in Dämpferdestillat (bei Hochtemperatur-konditioniertem Ausgangsöl) im gepressten, nicht entschleimten Öl im Extraktionsmittel-Öl-Gemisch, im extrahierten, nicht entschleimten Öl im Extraktionsmittel-Rückführstrom, im entschleimten Öl, im Öl mit Methanolzugabe, in der nicht separierten Produktmischung, im Fettsäuremethylester-Produkt beliebiger Aufreinigungsstufe oder im Glycerin-Produkt beliebiger Aufreinigungsstufe geschehen. Es ist hierbei unerheblich, ob der erfindungsgemäße Verfahrensschritt in einer separaten Anlage oder vorteilhafterweise im Anlagenverbund mit einem oder mehreren anderen Aufreinigungsschritten erfolgt.

Das erfindungsgemäße Verfahren kann grundsätzlich in zwei unterschiedlichen Varianten durchgeführt werden:

Zum einen kann die Abtrennung der Fettbegleitstoffe komplett in der flüssigen Phase erfolgen. Hierbei wird die Kolonne in einer beliebigen Richtung, vorteilhafterweise senkrecht von oben nach unten oder waagerecht, durchströmt. Diese Variante hat den Vorzug, dass gravitationsbedingte Gradienten quer zur Strömungsrichtung (z.B. höhere Randgängigkeit im oberen Bereich, Sedimentation von Abriebmaterial und dadurch erfolgendes Verblocken von Strömungswegen im unteren Bereich) ohne zusätzliche Maßnahmen verhindert werden können.
Alternativ erfolgt die Stofftrennung in Form einer Berieselung. Hierbei wird das flüssige Ausgangsmaterial in einer beliebigen abwärts führenden Richtung, vorteilhafterweise senkrecht von oben nach unten, geführt, während eine Gasphase im Gleichstrom oder aber vorteilhafterweise (da hierdurch höhere Stoffübertragungsraten zu erzielen sind) im Kreuz- oder Gegenstrom geführt wird.
Die Varianten "komplett in der flüssigen Phase" und "Berieselung" können jeweils auch für den Desorptionsschritt gewählt werden. Statt des flüssigen Ausgangsmaterials wird dann das Lösungsmittel als flüssige Phase eingesetzt.
Die gewählte Fahrweise kann einerseits zwischen der Sorptionsphase und der Desorptionsphase wechseln; andererseits kann auch innerhalb der Sorptions- und/oder Desorptionsphase ein Wechsel stattfinden und beispielsweise zunächst nur eine Abtrennung komplett in der flüssigen Phase erfolgen und in einer zweiten Kolonne (um eine vollständigere Abtrennung des Fettbegleitstoffs zu erreichen) im Kreuz-, Gegen- oder Gleichstrom ein Gas geführt werden.

Aus verfahrensökonomischen Gründen kann es sinnvoll sein, die Füllkörper nach der Sorptionsphase aus der Kolonne zu entnehmen und die Desorptionsphase in einer separaten Kolonne durchzuführen. In einem Produktionsprozess der technischen Verarbeitung biogener Fette und Öle kann dann das erfindungsgemäße Verfahren so erfolgen, dass nur die Sorptionsphase in den Produktionsprozess eingebunden ist. Sobald eine ausreichende Sorption des abzutrennenden Fettbegleitstoffs an den MIMs/Füllkörpern erfolgt ist, können dann die Füllkörper aus der Sorptionskolonne entleert werden und die Sorptionskolonne mit neuen (nicht beladenen) Füllkörpern/MIMs beschickt werden.
Werden die Füllkörper/MIMs nicht aus der Kolonne entnommen, so erfolgt der Desorptionsschritt in der bereits für die Sorptionsphase eingesetzten Kolonne.

Eine Abtrennung der Füllkörper/MIMs vor der Desorptionsphase kann auch bei sehr feinteiligen Füllkörpern/MIMs vorteilhaft sein. Diese können dann beispielsweise durch Filtration, Zentrifugation oder Ultrafiltration mechanisch von dem noch anhaftenden flüssigen Ausgangsmaterial abgetrennt werden. Die mit den Füllkörpern beschickte Kolonne kann auch derart ausgebildet sein, dass innerhalb der Kolonne zwei Membranen angeordnet sind, zwischen denen sich die Füllkörper befinden. Alternativ können die Membranen auch außerhalb der Kolonne angeordnet sein. Eine Anordnung zwischen Membranen ist insbesondere dann sinnvoll, wenn die Füllkörper sehr feinteilig sind. Außerdem kann durch eine derartige Anordnung verhindert werden, das von den Füllkörpern bzw. der Kolonne abgelöste MIMs ausgetragen werden.

Die Gewinnung der Fettbegleitstoffe aus den Füllkörpern ("Desorption") erfolgt im Regelfall durch Extraktion. Hierbei kann ein flüssiges, nahekritisches oder überkritisches Lösungsmittel (bzw. Extraktionsmittel) eingesetzt werden. Die Verwendung überkritischer Lösungsmittel ist hierbei besonders bevorzugt (da sich diese besonders gut von den Fettbegleitstoffen abtrennen lassen). Zu nennen sind insbesondere überkritisches CO₂, überkritisches H₂O und überkritisches Propan. Vor der Desorptionsphase kann eine Spülung der Kolonnenpackung erfolgen, um an den Füllkörpern anhaftende Reste des flüssigen Ausgangsmaterials zu entfernen. Bevorzugt wird hierbei ein Lösungsmittel eingesetzt, in dem sich das Ausgangsmaterial gut und der abzutrennende Fettbegleitstoff schlecht löst.
Weiterhin kann auch eine Trocknung der Kolonne und/oder der Kolonnenpackung erfolgen. Die Trocknung der Kolonnenpackung kann beispielsweise durch Durchleiten eines Gasstroms erfolgen, der gegebenenfalls aufgeheizt wurde. Alternativ oder zusätzlich können auch die Kolonne selbst und/oder die Füllkörper erwärmt werden. Hierfür sollten die Kolonne und/oder die (unbeschichteten) Füllkörper ganz oder teilweise aus elektrisch leitendem Material ausgeführt sein.
Auch durch das Trocknen der Kolonne/Kolonnenpackung wird ein höherer Reinheitsgrad der abzutrennenden Fettbegleitstoffe erzielt, da hierdurch flüchtige Ausgangsmaterialien und etwaige enthaltene Lösungsmittel (die nicht dem zur Desorption verwendeten Lösungsmittel entsprechen) abgetrennt werden. Sollen die Füllkörper getrocknet werden, so wird vorzugsweise eine zumindest teilweise zusammenhängende, beispielsweise gitterförmige Anordnung der Füllkörper bevorzugt.

Für das erfindungsgemäße Verfahren können auch beschichtete Füllkörper eingesetzt werden, die zumindest teilweise miteinander verbunden sind, so dass sich eine Kolonnenpackung ergibt, die zumindest teilweise gitterförmig ist. Die Kolonnenpackung kann dann so ausgeführt werden, dass sie zumindest teilweise elektrisch leitendes Material enthält, das für eine nochmals verbesserte Desorption der sorbierten Fettbegleitstoffe aufgeheizt werden kann.

Erfolgt das erfindungsgemäße Verfahren in einem Modus, bei dem die Desorption nicht in einer separaten Vorrichtung erfolgt, sondern bei dem ein einfaches Umschalten von Adsorptions- auf Desorptionsmodus stattfindet, so bietet sich der parallele Betrieb von mehreren Adsorbern an, die zyklisch in dem Desorptionsmodus geschaltet werden, um eine makroskopisch gesehen kontinuierliche Betriebsweise zu ermöglichen. Weiterhin können zur Abtrennung mehrerer verschiedener Fettbegleitstoffe mehrere Kolonnen, die jeweils unterschiedliche (auf die jeweiligen Fettbegleitstoffe maßgeschneiderte) MIMs enthalten, hintereinander geschaltet werden. Natürlich ist auch eine Parallelschaltung der Kolonne möglich, allerdings ist dann davon auszugehen, dass die erzielte Ausbeute der jeweiligen Fettbegleitstoffe geringer ist.

Weiterhin kann es vorteilhaft sein, in einem ersten Schritt nur ein Gemisch von der chemischen Struktur sehr ähnlicher Fettbegleitstoffe abzutrennen (beispielsweise unterschiedliche Carotinoide oder Tocopherole). In dem erfindungsgemäßen Verfahren erfolgt dann lediglich eine Abtrennung von Substanzen, die ein bestimmtes chemisches Strukturmerkmal enthalten; eine weitere Auftrennung kann dann beispielsweise unter Einsatz von speziell hierfür maßgeschneiderten MIMs, aber auch durch passende Extraktionsverfahren mit unter- oder überkritischen Lösungsmitteln erfolgen.

Unter Fettbegleitstoffen sind erfindungsgemäß insbesondere Minorkomponenten zu nennen. Üblicherweise liegt der Anteil der abzutrennenden Minorkomponente am Ausgansmaterial zwischen wenigen Massen-ppm und 50 Massen-‰ insbesondere bei bis zu maximal 10 Massen-‰, zumeist beträgt der Anteil maximal 3 Massen-‰. Häufig liegt auch der die Summe aller abtrennbaren Minorkomponenten im Bereich von bis zu 50 Massen-‰, insbesondere von bis zu 10 Massen-‰. Beispielsweise sei der Anteil von Tocopherolen in Sojaöl genannt, der 1,8 Massen-‰ beträgt. Aus produktionstechnischen Gründen kann es sinnvoll sein, das Gewinnungsverfahren für die Fettbegleitstoffe so auszulegen, dass nur maximal 50% (z.B. auch maximal 10%, maximal 20% oder maximal 30%), häufig auch maximal 70%, der abtrennbaren Minorkomponente tatsächlich abgetrennt werden (etwa um einen Produktionsprozess, bei der die Fettbegleitstoffgewinnung als Teilschritt erfolgt nicht unnötig zu verlangsamen). Die konkrete Auslegung des Verfahrens wird dabei auch anhand der Menge des pro Zeiteinheit über die erfindungsgemäße Kolonne geleiteten Ausgangsmaterial bestimmt werden.

Das erfindungsgemäße Verfahren ist insbesondere sinnvoll für die Abtrennung von Fettbegleitstoffen, die aus der Gruppe, bestehend aus Triterpenen, Tocochromanolen, Vitaminen, Provitaminen, Sterolen und anderen Steroiden, ausgewählt werden. Insbesondere sind hierbei zu nennen Carotinoide, Tocopherole, Tocotrienole, Gossipol, Phosphatidylcholine und Glucosinulate.

Besonders geeignete Ausgangsmaterialien für das erfindungsgemäße Verfahren werden ausgewählt aus der Gruppe, bestehend aus Rapsöl, Palmöl, Sonnenblumenöl, Baumwollsaatöl, Erdnussöl, Maisöl, Olivenöl, Leinöl, Sojaöl, Ölmethylestern, Fettsäuredestillaten aus der Biodieselherstellung und/oder der Verarbeitung von Ölen und Glycerinphasen aus der Biodieselherstellung und/oder der Verarbeitung von Ölen.
Als Ölmethylester sind insbesondere Ester der vorgenannten Öle zu nennen, beispielsweise Rapsölmethylester. Bei den Fettsäuredestillaten aus der Biodieselherstellung und/oder der Verarbeitung von Ölen sind insbesondere Fettsäuredestillate der vorstehenden Öle beispielsweise PFAD (palm oil fatty acid destillate) zu nennen. Bei den Glycerinphasen aus der Biodieselherstellung und/oder der Verarbeitung von Ölen sind beispielsweise Glycerinphasen aus der Herstellung von Rapsölmethylester zu nennen.
Die vorstehenden Öle können stets in raffiniertem, teil-raffiniertem oder nicht-raffiniertem Zustand vorliegen. Es kann auch ein Gemisch von teil-raffiniertem, raffiniertem oder nicht-raffiniertem Ausgangsmaterial vorliegen. Ebenso kann ein Ausgangsmaterial, das verschiedene der vorgenannten Komponenten enthält, die einzelnen Komponenten (jeweils unabhängig voneinander) in raffiniertem, teil-raffiniertem oder nicht-raffiniertem Zustand oder einem Gemisch hiervon enthalten.

Das erfindungsgemäße Verfahren ist üblicherweise so ausgelegt, dass es erlaubt, mindestens 100 kg, bevorzugt mindestens 500 kg Ausgangsmaterial je Stunde über die Kolonne zu leiten. Soll aus dem gesamten Ausgangsmaterial für einen Produktionsprozess, beispielsweise die Herstellung von Biodiesel, ein bestimmter oder mehrere Fettbegleitstoff(e) abgetrennt werden, so wird die Menge an Ausgangsmaterial, die je Stunde über eine Kolonne geleitet wird, auch noch deutlich darüber liegen. Alternativ können aber auch mehrere Kolonnen parallel geschaltet werden, um einen ausreichenden Durchsatz zu ermöglichen.

Es werden Festkörper aus synthetischem Korund gefertigt und gereinigt. Im Layer-by-layer-Verfahren wird der Grundstoff zunächst mit Poly(diallyldimethylammoniumchlorid) (PDADMAC) und danach mit molekular geprägten Nanopartikeln auf Basis von Ethylen-Glycol-Dimethacrylate (EGDMA) beschichtet. Es können 25 % der Korund-Oberfläche mit Nanopartikeln belegt werden. Die molekular geprägten Nanopartikel werden wie in der Literatur beschrieben (D. Vaihinger et al., Molecularly Imprinted Polymer Nanospheres as Synthetic Affinity Receptors Obtained by Miniemulsion Polymerisation, Macromol. Chem. Phys. 2002, 203, S. 1965-1973) mittels
Miniemulsionspolymerisation hergestellt und dabei mit Alpha-Tocopherol-Molekülen geprägt.
Diese Füllkörper werden in eine Adsorptionskolonne eingefüllt. Durch diese Kolonne wird Rapsöl aus »HOLL-Raps«
("High Oleic - Low Linolenic") mit einem Alpha-Tocopherol-Gehalt von 286 mg/kg geleitet. Es lassen sich über einen Zeitraum von 10 Stunden 5 µmol Alpha-Tocopherol je g Nanopartikel abtrennen.

Die Erfindung ist nicht durch die Beschreibung anhand des Ausführungsbeispiels beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder dem Ausführungsbeispiel angegeben ist.

## Patentansprüche

1. Verfahren zur Gewinnung von Fettbegleitstoffen aus Kraftstoffen, insbesondere Biokraftstoffen, sowie aus Ölen und Fetten, die zur Herstellung derartiger Kraftstoffe eingesetzt werden oder während der Herstellung derartiger Kraftstoffe entstehen (Ausgangsmaterial), mit folgenden Schritten:
- Bereitstellen einer Kolonne, die zumindest teilweise eine Beschichtung mit einem molecular imprinted material (MIN) aufweist und/oder Füllkörper enthält, die ein molecular imprinted material (MIM) enthalten und insbesondere eine Beschichtung mit dem molecular imprinted material (MIM) aufweisen oder aus einem derartigen Stoff bestehen,
- Leiten des flüssigen Ausgangsmaterials über die Kolonne, so dass mindestens ein Fettbegleitstoff zumindest teilweise an dem molecular imprinted material (MIM) sorbiert wird (Sorptionsphase)
- Kontaktieren des molecular imprinted material (MIM) mit einem flüssigen, gasförmigen oder dampfförmigen Lösungsmittel, so dass der mindestens eine Fettbegleitstoff desorbiert und im Lösungsmittel zumindest teilweise gelöst wird (Desorptionsphase)
- Abtrennen des Lösungsmittels von dem mindestens einen Fettbegleitstoff.

2. Verfahren nach Anspruch 1,
**dadurch gekennzeichnet, dass**
das molecular imprinted material (MIM) ein Polymer (MIP), ein Hydrogel oder eine Keramik (MIC) ist.

3. Verfahren nach einem der vorhergehenden Ansprüche,
**dadurch gekennzeichnet, dass**
die beschichteten Füllkörper durch Beschichtung von Füllkörpern, die in Destillationsverfahren verwendbar sind, erhältlich sind.

4. Verfahren nach einem der vorhergehenden Ansprüche,
**dadurch gekennzeichnet, dass**
die Füllkörper porös sind oder eine Beschichtung aus einem porösen Material aufweisen.

5. Verfahren nach einem der vorhergehenden Ansprüche,
**dadurch gekennzeichnet, dass**
die Füllkörper aus einem Material bestehen oder eine Beschichtung aus einem Material aufweisen, in dem/der das molecular imprinted material (MIM) in einer polymeren Matrix vorliegt, wobei dieses Material erhältlich ist, indem ein Gemisch aus dem fertig funktionalisierten und polymerisierten molecular imprinted material (MIM) und dem der polymeren Matrix zugrundeliegenden Monomer polymersiert wird.

6. Verfahren nach dem vorhergehenden Anspruch,
**dadurch gekennzeichnet, dass**
die polymere Matrix ein Hydrogel und/oder ein Lipogel ist und das molecular imprinted material (MIM) in der polymeren Matrix reversibel oder irreversibel eingelagert ist, wobei das molecular imprinted material (MIM) kein Hydrogel ist.

7. Verfahren nach einem der vorhergehenden Ansprüche,
**dadurch gekennzeichnet, dass**
Sorption und Desorption derart erfolgt, dass während der Sorptionsphase die Kolonne mit dem flüssigen Ausgangsmaterial und/oder der Desorptionsphase die Kolonne mit dem Lösungsmittel berieselt wird und im Gleichstrom, Kreuzstrom oder Gegenstrom ein Gas durch die Kolonne geführt wird.

8. Verfahren nach einem der vorhergehenden Ansprüche,
**dadurch gekennzeichnet, dass**
die Füllkörper vor dem Desorptionsschritt in der Kolonne verbleiben oder vor dem Desorptionsschritt aus der Kolonne entnommen werden und die entnommenen Füllkörper zur Abtrennung von Ausgangsmaterial insbesondere einem Filtrationsverfahren oder einem Zentrifugationsverfahren unterworfen werden.

9. Verfahren nach einem der vorhergehenden Ansprüche,
**dadurch gekennzeichnet, dass**
die Füllkörper zwischen zwei Membranen angeordnet werden, die sich innerhalb oder außerhalb der Kolonne befinden.

10. Verfahren nach einem der vorhergehenden Ansprüche,
**dadurch gekennzeichnet, dass**
das Lösungsmittel ein überkritisches Fluid ist.

11. Verfahren nach einem der vorhergehenden Ansprüche,
**dadurch gekennzeichnet, dass**
zwischen Sorptionsphase und Desorptionsphase eine Spülung und/oder eine zumindest teilweise Trocknung der Kolonne und/oder der Kolonnenpackung erfolgt.

12. Verfahren nach einem der vorhergehenden Ansprüche,
**dadurch gekennzeichnet, dass**
zur Abtrennung mehrerer Fettbegleitstoffe mehrere Kolonnen, die jeweils unterschiedliche MIMs enthalten, hintereinandergeschaltet werden.

13. Verfahren nach einem der vorhergehenden Ansprüche,
**dadurch gekennzeichnet, dass**
der Fettbegleitstoff ausgewählt wird aus der Gruppe bestehend aus Triterpenen, Tocochromanolen, Vitaminen, Provitaminen, Sterolen und anderen Steroiden, und insbesondere ausgewählt wird aus der Gruppe bestehend aus Carotinoiden, Tocopherolen, Tocotrienolen, Gossypol, Phosphatidylcholinen und Glucosinolaten.

14. Verfahren nach einem der vorhergehenden Ansprüche,
**dadurch gekennzeichnet, dass**
das Ausgangsmaterial ausgewählt wird aus der Gruppe bestehend aus Rapsöl, Palmöl, Sonnenblumenöl, Baumwollsaatöl, Erdnussöl, Maisöl, Olivenöl, Leinöl, Sojaöl, Ölmethylestern, Fettssäuredestillaten aus der Biodieselherstellung und/oder der Verarbeitung von Ölen und Glycerinphasen aus der Biodieselherstellung und/oder der Verarbeitung von Ölen.

15. Verwendung des Verfahrens nach einem der vorhergehenden Ansprüche zur Isolierung von Fettbegleitstoffen aus Kraftstoffen, insbesondere Biokraftstoffen, sowie aus Ölen und Fetten, die zur Herstellung derartiger Kraftstoffe eingesetzt werden.

## Claims

1. Process for fat accompanying components from fuels, especially from biofuels, and from oils and fats which are used for production of such fuels or are obtained during the production of such fuels (starting material), comprising the following steps:
- providing a column which at least partly has a coating with a molecular imprinted material (MIM) and/or comprises random packings which comprise a molecular imprinted material (MIM) and especially have a coating with the molecular imprinted material (MIM) or consist of such a substance,
- passing the liquid starting material through the column such that at least one fat component is at least partly sorbed on the molecular imprinted material (MIM) (sorption phase),
- contacting the molecular imprinted material (MIM) with a liquid, gaseous or vaporous solvent such that the at least one fat accompanying component is desorbed and at least partly dissolved in the solvent (desorption phase),
- removing the solvent from the at least one fat accompanying components.

2. Process according to Claim 1,
**characterized in that**
the molecular imprinted material (MIM) is a polymer (MIP), a hydrogel or a ceramic (MIC).

3. Process according to either of the preceding claims,
**characterized in that**
the coated random packings are obtainable by coating random packings usable in distillation processes.

4. Process according to any of the preceding claims,
**characterized in that**
the random packings are porous or have a coating of a porous material.

5. Process according to any of the preceding claims,
**characterized in that**
the random packings consist of a material or have a coating of a material in which the molecular imprinted material (MIM) is present in a polymeric matrix, said material being obtainable by polymerizing a mixture of the ready-functionalized and polymerized molecular imprinted material (MIM) and the parent monomer of the polymeric matrix.

6. Process according to the preceding claim,
**characterized in that**
the polymeric matrix is a hydrogel and/or a lipogel and the molecular imprinted material (MIM) has been reversibly or irreversibly intercalated in the polymeric matrix, in which case the molecular imprinted material (MIM) is not a hydrogel.

7. Process according to any of the preceding claims,
**characterized in that**
sorption and desorption are effected in such a way that the liquid starting material during the sorption phase and/or the solvent during the desorption phase trickles through the column, and a gas is conducted through the column in cocurrent, crosscurrent or countercurrent.

8. Process according to any of the preceding claims,
**characterized in that**
the random packings remain in the column before the desorption step or are removed from the column before the desorption step, and starting material is separated from the random packings removed by subjecting them especially to a filtration process or a centrifugation process.

9. Process according to any of the preceding claims,
**characterized in that**
the random packings are arranged between two membranes within or outside the column.

10. Process according to any of the preceding claims,
**characterized in that**
the solvent is a supercritical fluid.

11. Process according to any of the preceding claims,
**characterized in that**
the column and/or the column packing is rinsed and/or at least partly dried between the sorption phase and desorption phase.

12. Process according to any of the preceding claims,
**characterized in that**
several fat accompanying components are removed by connecting several columns each containing different MIMs in series.

13. Process according to any of the preceding claims,
**characterized in that**
the fat accompanying component is selected from the group consisting of triterpenes, tocochromanols, vitamins, provitamins, sterols and other steroids, and is especially selected from the group consisting of carotenoids, tocopherols, tocotrienols, gossypol, phosphatidylcholines and glucosinolates.

14. Process according to any of the preceding claims,
**characterized in that**
the starting material is selected from the group consisting of rapeseed oil, palm oil, sunflower oil, cottonseed oil, peanut oil, corn oil, olive oil, linseed oil, soya oil, oil methyl esters, fatty acid distillates from biodiesel production and/or the processing of oils and glycerol phases from biodiesel production and/or the processing of oils.

15. Use of the process according to any of the preceding claims for isolating fat accompanying components from fuels, especially biofuels, as well as oils and fats which are used for production of such fuels.

## Revendications

1. Procédé pour l'obtention de substances associées à la graisse à partir de carburants, en particulier de biocarburants, ainsi qu'à partir d'huiles et de graisses qui sont utilisées pour la production de ces carburants ou formées pendant la production de ces carburants (matériau de départ), présentant les étapes suivantes :
- préparation d'une colonne qui présente au moins partiellement un revêtement avec un matériau à empreinte moléculaire (molecular imprinted material - MIM) et/ou contient des corps de remplissage qui contiennent un matériau à empreinte moléculaire (MIM) et qui présentent en particulier un revêtement avec le matériau à empreinte moléculaire (MIM) ou qui sont constitués par une telle substance,
- guidage du matériau de départ liquide sur la colonne, de manière telle qu'au moins une substance associée à la graisse est absorbée au moins partiellement par le matériau à empreinte moléculaire (MIM) (phase de sorption)
- mise en contact du matériau à empreinte moléculaire (MIM) avec un solvant liquide, gazeux ou en forme vapeur, de manière telle que ladite au moins une substance associée à la graisse est désorbée et au moins partiellement dissoute dans le solvant (phase de désorption)
- séparation du solvant de ladite au moins une substance associée à la graisse.

2. Procédé selon la revendication 1, **caractérisé en ce que** le matériau à empreinte moléculaire (MIM) est un polymère (MIP), un hydrogel ou une céramique (MIC).

3. Procédé selon l'une quelconque des revendications précédentes, **caractérisé en ce que** les corps de remplissage revêtus peuvent être obtenus par revêtement de corps de remplissage qui peuvent être utilisés dans des procédés de distillation.

4. Procédé selon l'une quelconque des revendications précédentes, **caractérisé en ce que** les corps de remplissage sont poreux ou présentent un revêtement en un matériau poreux.

5. Procédé selon l'une quelconque des revendications précédentes, **caractérisé en ce que** les corps de remplissage sont constitués par un matériau ou présentent un revêtement constitué par un matériau dans lequel le matériau à empreinte moléculaire (MIM) se trouve dans une matrice polymère, ce matériau pouvant être obtenu **en ce qu'**un mélange du matériau à empreinte moléculaire (MIM) fini, fonctionnalisé et polymérisé et du monomère à la base de la matrice polymère est polymérisé.

6. Procédé selon la revendication précédente, **caractérisé en ce que** la matrice polymère est un hydrogel et/ou un lipogel et le matériau à empreinte moléculaire (MIM) est incorporé de manière réversible ou irréversible dans la matrice polymère, le matériau à empreinte moléculaire (MIM) n'étant pas un hydrogel.

7. Procédé selon l'une quelconque des revendications précédentes, **caractérisé en ce que** la sorption et la désorption sont réalisées de telle sorte que pendant la phase de sorption, la colonne est arrosée par le matériau de départ liquide et/ou pendant la phase de désorption, la colonne est arrosée par le solvant et un gaz est guidé en courant parallèle, en courant croisé ou à contre-courant dans la colonne.

8. Procédé selon l'une quelconque des revendications précédentes, **caractérisé en ce que** les corps de remplissage restent dans la colonne avant l'étape de désorption ou sont enlevés de la colonne avant l'étape désorption et les corps de remplissage enlevés sont soumis en particulier à un procédé de filtration ou de centrifugation pour la séparation du matériau de départ.

9. Procédé selon l'une quelconque des revendications précédentes, **caractérisé en ce que** les corps de remplissage sont disposés entre deux membranes qui se trouvent dans ou en dehors de la colonne.

10. Procédé selon l'une quelconque des revendications précédentes, **caractérisé en ce que** le solvant est un fluide supercritique.

11. Procédé selon l'une quelconque des revendications précédentes, **caractérisé en ce qu'**un rinçage et/ou un séchage au moins partiel de la colonne et/ou du garnissage de la colonne a lieu entre la phase de sorption et de désorption.

12. Procédé selon l'une quelconque des revendications précédentes, **caractérisé en ce que** pour la séparation de plusieurs substances associées à la graisse, plusieurs colonnes qui contiennent à chaque fois des MIM différents, sont disposées les unes derrière les autres.

13. Procédé selon l'une quelconque des revendications précédentes, **caractérisé en ce que** la substance associée à la graisse est choisie dans le groupe constitué par les triterpènes, les tocochromanols, les vitamines, les provitamines, les stérols et d'autres stéroïdes, et en particulier choisie dans le groupe constitué par les caroténoïdes, les tocophérols, les tocotriénols, le gossypol, les phosphatidylcholines et les glucosinolates.

14. Procédé selon l'une quelconque des revendications précédentes, **caractérisé en ce que** le matériau de départ est choisi dans le groupe constitué par l'huile de colza, l'huile de palme, l'huile de tournesol, l'huile de graines de coton, l'huile d'arachide, l'huile de maïs, l'huile d'olive, l'huile de lin, l'huile de soja, les esters méthyliques d'huile, les produits de distillation d'acides gras provenant de la production de biodiesel et/ou de la transformation d'huiles et les phases de glycérol provenant de la production de biodiesel et/ou de la transformation d'huiles.

15. Utilisation du procédé selon l'une quelconque des revendications précédentes pour l'isolement de substances associées à la graisse à partir de carburants, en particulier de biocarburants, ainsi qu'à partir d'huiles et de graisses qui sont utilisées pour la production de ces carburants.
